# EUROPÄISCHE PATENTSCHRIFT

(11) **EP 2 300 390 B1**
(45) Veröffentlichungstag und Bekanntmachung des Hinweises auf die Patenterteilung: **13.03.2013**
(21) Anmeldenummer: 09780523.8
(22) Anmeldetag: 13.07.2009
(51) Int. Cl.: C04B 28/02, C04B 28/12, C04B 24/26, C04B 24/12, C04B 40/00

(54) **ZUSATZMITTEL ZUM VERFESTIGEN VON NATÜRLICHEN BÖDEN UND MINERALISCHEN BAUSTOFFEN UND VERFAHREN ZU DESSEN HERSTELLUNG**
ADDITIVE FOR REINFORCING NATURAL SOILS AND MINERAL BUILDING MATERIALS AND METHOD FOR THE MANUFACTURE THEREOF
ADDITIF POUR CONSOLIDER DES SOLS NATURELS ET DES MATÉRIAUX DE CONSTRUCTION MINÉRAUX ET SON PROCÉDÉ DE PRODUCTION

(30) Priorität: 15.07.2008 EP 08160407
(43) Veröffentlichungstag der Anmeldung: 30.03.2011
(73) Patentinhaber: Müller, Rudi, 67063 Ludwigshafen (DE)
(72) Erfinder: PHADNIS, Sanjay B., Pune 411 008 (IN)
(74) Vertreter: WSL Patentanwälte Partnerschaftsgesellschaft
(86) Internationale Anmeldenummer: PCT/EP2009/058934
(87) Internationale Veröffentlichungsnummer: WO 2010/007029

(56) Entgegenhaltungen:
- EP-A- 0 032 664
- EP-A- 0 058 388
- DE-A1- 19 914 367

## Beschreibung

Die vorliegende Erfindung betrifft ein Zusatzmittel zum Verfestigen von natürlichen Böden oder mineralischen Baustoffen, wobei das Zusatzmittel aus mehreren verschiedenen Komponenten zusammengesetzt ist. Weiterhin betrifft die vorliegende Erfindung ein Verfahren zur Herstellung eines solchen Zusatzmittels sowie ein Kit (Komponentensatz) und eine Verfestigungsmasse, die dieses Zusatzmittel umfassen. Darüber hinaus umfaßt die vorliegende Erfindung ein Verfahren zum Verfestigen von natürlichen Böden und mineralischen Baustoffen, bei dem man das Zusatzmittel, die Verfestigungsmasse oder das Kit verwendet, um natürliche Böden oder mineralische Baustoffe zu verfestigen.

Die Tragfähigkeit des Baugrundes stellt bei der Planung und Durchführung von Baumaßnahmen regelmäßig ein beachtliches Problem dar. Zum einen muß die Tragfähigkeit des Baugrundes für das auf dem Baugrund zu errichtende Bauwerk grundsätzlich geeignet sein und zum anderen muß sichergestellt werden, daß es nachträglich nicht zu Veränderungen der Tragfähigkeit des Baugrundes kommen kann, die zu unerwünschten Setzungen führen könnten. Man führt daher üblicherweise Maßnahmen zur Baugrundverfestigung durch. Die einfachste Maßname der Baugrundverfestigung ist die Bodenverdichtung durch Verdichten der entsprechenden Fläche mit geeignetem Gerät. Eine weitere, sehr effektive Maßnahme zur Baugrundverfestigung ist die Zementinjektion. Hierbei wird ein dünnflüssiger Wasser-Zementbrei in den Boden gepreßt. Bei einem verfeinerten Verfahren der Zementinjektion werden kolloidal aufbereitete Zementgemische verwendet, bei denen der Zement zuvor unter Zusatz schaumbildender Mittel so stark aufgeschlagen wird, daß sich eine kolloidale, stabile und fließfähige Suspension bildet. Sobald die Zementsuspension im Boden ausgehärtet ist, ist die Baugrundverfestigung abgeschlossen.

Je nach Art und Zusammensetzung des Baugrundes stellt die Zementinjektion kein zufriedenstellendes Verfahren dar, mit dem eine hinreichende Bodenverfestigung erreicht werden kann. Es ist daher die Aufgabe der vorliegenden Erfindung, ein Mittel zum Verfestigung von natürlichen Böden bereitzustellen, welches vor allem beim Straßenbau, bei der Präparierung des Baugrundes für neue Wohn- und Gewerbegebiete sowie beim Bau von großen Industrieanlagen und Flughäfen zur signifikanten Erhöhung der Tragfähigkeit des Baugrundes führt. Darüber hinaus soll das Verfestigungsmittel vorzugsweise auch eine abdichtende Wirkung aufweisen, damit dieses Mittel auch bei wasserbautechnischen Maßnahmen und Deponiebau mit Vorteil einsetzbar ist. Des weiteren ist es gewünscht, daß dieses Mittel beim auch zur Verfestigung von mineralischen Baustoffen geeignet ist.

DE 199 14 367 A1 beschreibt eine hydraulisch abbindende Zusammensetzung, die Amidobetaine, Ethercarbonsäuren und Alkylbetaine als Hilfsstoffe enthält, und die Verwendung dieser Zusammensetzung zur Herstellung von Formkörpern sowie für spezielle Bau-, Putz- und Spachtelmassen.

EP 0 032 664 beschreibt ein Hydrophobiermittel für geblähte Materialien, bestehend aus einem Fettamin, einer Fettsäure oder eines Fettalkohols sowie einer niedermolekularen Säure.

EP 0 058 388 beschreibt einen wasserabweisenden Gipsmörtel, gekennzeichnet durch einen Gehalt eines Hydrophobiermittels bestehend aus einem Fettamin, einer niedermolekularen Säure und einem Alkalisilikonat.

Die oben genannte Aufgabe wird gemäß der vorliegenden Erfindung durch ein Zusatzmittel der eingangs genannten Art gelöst, wobei das Zusatzmittel bezogen auf sein Gesamtgewicht anteilsmäßig die folgenden Komponenten umfaßt:
a) 85 bis 98 Gew.-% C8- bis C18-Fettsäureamine und/oder -sulfate, wobei die Fettsäureamine Aminderivate von Fettsäuren mit 8 bis 18 Kohlenstoffatomen in der Kohlenstoffkette sind und eine endständige Aminogruppe aufweisen, und die Fettsäuresulfate Sulfat-derivate von Fettsäuren mit 8 bis 18 Kohlenstoffatomen in der Kohlenstoffkette sind und eine endständige Sulfatgruppe aufweisen,
b) 1 bis 5 Gew.-% nicht-ionisches Polyacrylamid und
c) 1 bis 5 Gew.-% kationisches Polyacrylamid.

Unter den erfindungsgemäß als Komponente a) verwendeten Fettsäureaminen und/oder - sulfaten sind von Fettsäuren mit 8 bis 18 Kohlenstoffatomen in der Kohlenstoffkette abgeleitete aliphatische Amine und/oder Sulfate zu verstehen. Die Fettsäureamine weisen dabei eine endständige primäre Aminogruppe und damit die allgemeine Formel C₈₋₁₈-Alkyl-NH₂ oder C₈₋₁₈-Alkenyl-NH₂ auf, während die Fettsäuresulfate eine endständige Sulfatgruppe und damit die allgemeine Formel C₈₋₁₈-Alkyl-O-SO₃⁻ oder C₈₋₁₈-Alkeny-O-SO₃⁻ aufweisen. Die Fettsäureamine und/oder -sulfate, die bei der vorliegenden Erfindung zur Anwendung kommen können, umfassen alle entsprechenden Amin- und/oder Sulfat-Derivate der herkömmlichen gesättigten und einfach oder mehrfach ungesättigten Fettsäuren mit 8 bis 18 Kohlenstoffatomen in der Kohlenstoffkette.

Gemäß der vorliegenden Erfindung kann der Anteil der Fettsäureamine und/oder -sulfate 85 bis 98 Gew.-% betragen, wobei dieser Anteil auf das Gesamtgewicht des Zusatzmittels bezogen wird. Vorzugsweise beträgt der Anteil der Fettsäureamine und/oder -sulfate 85 bis 95 Gew.-% bezogen auf das Gesamtgewicht des Zusatzmittels. Daneben enthält das Zusatzmittel einen Anteil von 1 bis 5 Gew.-% nicht-ionisches Polyacrylamid und einen Anteil von 1 bis 5 Gew.-% kationisches Polyacrylamid. Vorzugsweise beträgt der Anteil von nicht-ionischem Polyacrylamid bzw. kationischem Polyacrylamid 2 bis 4 Gew.-%. Besonders bevorzugt beträgt die Summe der Anteile von nicht-ionischem und kationischem Polyacrylamid 4 bis 6 Gew.-%.

Das Zusatzmittel kann weiterhin auch einen Anteil von weiteren Zusätzen aufweisen, die von den oben genannten Komponenten a) bis c) abweichen. Vorzugsweise macht die Summe der Komponenten a) bis c) bezogen auf das Gesamtgewicht des Zusatzmittels 90 Gew.-% aus, besonders bevorzugt 95 Gew.-% und noch bevorzugter 98 Gew.-%.

Bei einer bevorzugten Ausführungsform der vorliegenden Erfindung umfaßt die Komponente a) bezogen auf das Gesamtgewicht dieser Komponente anteilsmäßig
i) 43 bis 63 Gew.-% Kokosfettsäureamine,
ii) 8 bis 18 Gew.-% Laurylamin und
iii) 25 bis 39 Gew.-% Triethanolaminlaurylsulfat und/oder Talgamin.

Unter Kokosfettsäureaminen werden im Sinne der vorliegenden Erfindung Fettsäureamingemische verstanden, die sich aus dem Kokosöl ableiten lassen und die einen Anteil von wenigstens 40 Gew.-% Laurylamin und wenigstens 10 Gew.-% Myristylamin enthalten. Vorzugsweise bestehen die Kokosfettsäureamine aus einem Gemisch von Laurylamin und Myristylamin in einem Verhältnis in dem Bereich von 5:1 bis 4:3. Bei bevorzugten Ausführungsformen enthält das Kokosfettsäureamin etwa 40 bis 55 Gew.-% Laurylamin und etwa 10 bis 25 Gew.-% Myristylamin. Bei einer weiteren bevorzugten Ausführungsform umfaßt das Kokosfettsäureamingemisch auch etwa 8 bis 10 Gew.-% Palmitylamin und etwa 6 bis 12 Gew.-% Oleylamin. Bei einer weiteren bevorzugten Ausführungsform umfaßt das Kokosfettsäureamingemisch zusätzlich bis zu 1 Gew.-% Hexylamin, bis zu 8 Gew.-% Octylamin, bis zu 9 Gew.-% Decylamin, bis zu 3 Gew.-% Stearylamin und/oder bis zu 1 Gew.-% Linolamin.

Bei einer bevorzugten Ausführungsform der Erfindung beträgt der Anteil des Bestandteils i) bezogen auf das Gesamtgewicht der Komponente a) 50 bis 55 Gew.-%.

Der Bestandteil ii) der Komponente a) besteht aus Laurylamin. Dieser Anteil an Laurylamin ist in der Komponente a) zusätzlich zu dem Anteil an Laurylamin enthalten, der über den Bestandteil i) bereits in der Komponente a) enthalten ist. Anders ausgedrückt umfaßt die Komponente a) neben dem in den Kokosfettsäureaminen (Bestandteil i)) enthaltenen Laurylamin zusätzlich 8 bis 18 Gew.-% Laurylamin bezogen auf das Gesamtgewicht der Komponente a). Bei einer bevorzugten Ausführungsform der Erfindung beträgt die Menge an zusätzlichem Laurylamin bezogen auf das Gesamtgewicht der Komponente a) 12 bis 16 Gew.-%.

Der Bestandteil iii) der Komponente a) kann alternativ Triethanolaminlaurylsulfat oder Talgamin sein. Des weiteren kann dieser Bestandteil auch aus Triethanolaminlaurylsulfat und Talgamin zusammengesetzt sein. In jedem Fall liegt die Summe der Anteile von Triethanolaminlaurylsulfat und Talgamin immer in dem Bereich von 25 bis 39 Gew.-% bezogen auf das Gesamtgewicht der Komponente a). Bei einer bevorzugten Ausführungsform der Erfindung liegt der Anteil des Bestandteils iii) bezogen auf das Gesamtgewicht der Komponente a) in dem Bereich von 30 bis 35 Gew.-%.

Unter Talgamin wird im Sinne der vorliegenden Erfindung ein Gemisch von Fettsäureaminen verstanden, die 14 bis 18 Kohlenstoffatome aufweisen. Vorzugsweise besteht dieses Gemisch aus zu wenigstens 95 Gew.-% Fettsäureaminen mit einer geraden Anzahl von Kohlenstoffatomen in der Kohlenstoffkette. Besonders bevorzugt weist dieses Gemisch einen Anteil von 20 bis 30 Gew.-% Palmitinsäure, einen Anteil von 15 bis 25 Gew.-% Stearinsäure und/oder einen Anteil von 35 bis 45 Gew.-% Ölsäure auf.

Vorzugsweise macht die Summe der Bestandteil i) bis iii) bezogen auf das Gesamtgewicht der Komponente a) 90 Gew.-% aus, besonders bevorzugt 95 Gew.-%, noch bevorzugter 99 Gew.-% und insbesondere bevorzugt 100 Gew.-%.

Bei einer bevorzugten Ausführungsform der vorliegenden Erfindung ist die Komponente a) dadurch gekennzeichnet, daß sie aus vollständig hydrierten Fettsäureaminen oder -sulfaten besteht. Die Hydrierung führt zu einer Sättigung des Fettsäureamins oder -sulfats und damit zu einer Erhöhung des Schmelzpunkts. Das Resultat ist ein wachsartiger Stoff, dessen Bindewirkung sich bei der Anwendung des Zusatzmittels besonders stabilisierend und verfestigend auswirkt.

Bei den Ausführungsformen der vorliegenden Erfindung, bei denen als Bestandteil der Komponente a) Triethanolaminlaurylsulfat enthalten ist, besteht dieses vorzugsweise aus trockenem Triethanolaminlaurylsulfat.

Bei einer bestimmten Ausführungsform der vorliegenden Erfindung ist das Zusatzmittel dadurch gekennzeichnet, daß es auch einen Anteil an Ditalgamin aufweist. Ditalgamin wirkt als Aminverdünner in der Kettenlänge C16 bis C22. Vorzugsweise beträgt der Anteil an Ditalgamin an maximal 20 Gew.-%, vorzugsweise maximal 5 Gew.-%, besonders bevorzugt maximal 1 Gew.-%.

Bei einer bevorzugten Ausführungsform des erfindungsgemäßen Zusatzmittels enthält dieses bezogen auf sein Gesamtgewicht einen Anteil von 2 bis 5 Gew.-% Bariumsulfat.

Bei einer weiteren bevorzugten Ausführungsform des erfindungsgemäßen Zusatzmittels enthält dieses einen Anteil an Silikon oder anderen Hydrophobierungsmitteln zur Erhöhung der Hydrophobierungswirkung.

Das erfindungsgemäße Zusatzmittel kann grundsätzlich nach jedem dem Fachmann bekannten Verfahren hergestellt werden, zum Beispiel indem dessen Bestandteile in granulärer oder pulveriger Form miteinander vermischt werden. Darüber hinaus haben die Erfinder des in dieser Anmeldung beschriebenen Zusatzmittels herausgefunden, daß es besonders vorteilhaft ist, wenn das erfindungsgemäße Zusatzmittel nach einem Verfahren hergestellt wird, bei dem man zunächst den Anteil an Fettsäureaminen und/oder -sulfaten bis zur Schmelze erwärmt. Parallel werden die Anteile an nicht-ionischem Polyacrylamid und an kationischem Polyacrylamid optional mit weiteren Zusätzen, wie zum Beispiel Bariumsulfat, vermischt. Anschließend wird das Gemisch aus Polyacrylamiden und gegebenenfalls weiteren Zusätzen mit den geschmolzenen Fettsäureaminen und/oder -sulfaten vermischt. Sobald hieraus eine homogene Mischung erstellt wurde, läßt man die Masse erkalten und zerkleinert sie anschließend. Das hierdurch erhaltene Granulat bzw. Pulver stellt ein besonders bevorzugtes Zusatzmittel gemäß der vorliegenden Erfindung dar.

Vorzugsweise weist das erfindungsgemäße Zusatzmittel einen pH-Wert im Bereich von 7 bis 8 (wäßrige Aufschlämmung) und einen Schmelzpunkt von wenigstens 65° auf. Besonders bevorzugt beträgt der pH-Wert 7,5. Der Schmelzpunkt liegt vorzugsweise in dem Bereich von 65 bis 80°C, noch bevorzugter im Bereich von 68 bis 75°C.

Das erfindungsgemäße Zusatzmittel liegt vorzugsweise als Granulat oder in Pulverform vor. Vorzugsweise ist die mittlere Partikelgröße < 20 mm, besonders bevorzugt < 12 mm.

Vorzugsweise weist das Zusatzmittel eine Schüttdichte im Bereich von 0,5 bis 1,5 g/cm³ auf, noch bevorzugter im Bereich von 0,8 bis 1,2 g/cm³.

Das hier beschriebene und beanspruchte Zusatzmittel wird zum Verfestigen von natürlichen Böden oder mineralischen Baustoffen, wie z.B. Mineralstoffmischungen zum Abdichten von Teichanlagen als Ersatz für Abdichtungsfolien, verwendet.

Die Verwendung erfolgt typischerweise in Verbindung mit einem Gemisch aus Zement und Kalk. Daher wird mit der vorliegenden Anmeldung auch ein Kit zum Verfestigen von natürlichen Böden oder mineralischen Baustoffen beansprucht, welches ein oder mehrere Einheiten eines Zusatzmittels gemäß der vorliegenden Erfindung umfaßt, sowie ein oder mehrere Einheiten Zement und/oder ein oder mehrere Einheiten Kalk. Das Kit ist demnach ein Komponentensatz mit nach dem Baukastenprinzip zusammengestellten Komponenten zum Verfestigen von natürlichen Böden oder mineralischen Baustoffen und umfaßt dabei ein oder mehrere Einheiten eines Zusatzmittels, ein oder mehrere Einheiten Zement und/oder ein oder mehrere Einheiten Kalk. Durch Mischen des erfindungsgemäßen Zusatzmittels mit Zement und Kalk entsteht eine Verfestigungsmasse, die dadurch gekennzeichnet, daß die Verfestigungsmasse bezogen auf ihr Gesamtgewicht einen Anteil von 1 bis 10 Gew.-% erfindungsgemäßen Zusatzmittels aufweist und einen Anteil von 90 bis 99 Gew.-%, der aus einem Gemisch von Zement und Kalk besteht.

Des weiteren beansprucht die vorliegende Anmeldung ein Verfahren zum Verfestigen von natürlichen Böden oder mineralischen Baustoffen, bei dem man ein oder mehrere Einheiten eines erfindungsgemäßen Zusatzmittels mit einer oder mehreren Einheiten Zement und/oder Kalk vermischt und anschließend dieses Gemisch als eine Schicht auf den zu verfestigenden natürlichen Boden oder mineralischen Baustoff aufbringt. Auf diese Schicht aus dem Gemisch aus Zusatzmittel, Zement und/oder Kalk wird dann eine wäßrige Flüssigkeit aufgebracht. Letztlich wird der auf diese Weise behandelte natürliche Boden oder mineralische Baustoff mit geeigneten Geräten mechanisch komprimiert.

Demgemäß wird auch ein Kit beansprucht, welches neben dem erfindungsgemäßen Zusatzmittel, Zement und/oder Kalk auch eine Flüssigkeit umfaßt. Vorzugsweise weist diese Flüssigkeit Anteile an monomolekularen und polymolekularen grenzflächenaktiven Substanzen, sowie wenigstens einen Lösungsvermittler, Emulgatoren und Katalysatoren mit einem Gehalt an Propylendiamin, Dimethyammoniumchlorid und Isopropylalkohol auf.

Des weiteren wird auch eine Verfestigungsmasse beansprucht, die zusätzlich zu dem erfindungsgemäßen Zusatzmittel, Zement und/oder Kalk einen Anteil an Flüssigkeit umfaßt, wobei die Flüssigkeit eine wäßrige Flüssigkeit ist, die einen Anteil an monomolekularen und polymolekularen grenzflächenaktiven Substanzen aufweist sowie wenigstens einen Lösungsvermittler, Emulgatoren und Katalysatoren mit einem Gehalt an Propylendiamin, Dimethylammoniumchlorid und Isopropylalkohol umfaßt.

Für Zwecke der ursprünglichen Offenbarung wird darauf hingewiesen, daß sämtliche Merkmale, wie sie sich aus der vorliegenden Beschreibung und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde, oder chemische bzw. physikalisch-chemische Gegebenheiten derartige Kombinationen unmöglich oder sinnlos machen. Auf die umfassende explizite Darstellung sämtlicher Merkmalskombinationen wird hier nur der Kürze und der Lesbarkeit der Beschreibung wegen verzichtet.

Weitere Merkmale, Merkmalskombinationen und Vorteile, die sich aus einzelnen Merkmalen und bestimmten Merkmalskombinationen der vorliegenden Erfindung ergeben, werden aus den folgenden Beispiel in Verbindung mit der anhängenden Figur ersichtlich.

Hierbei zeigt:

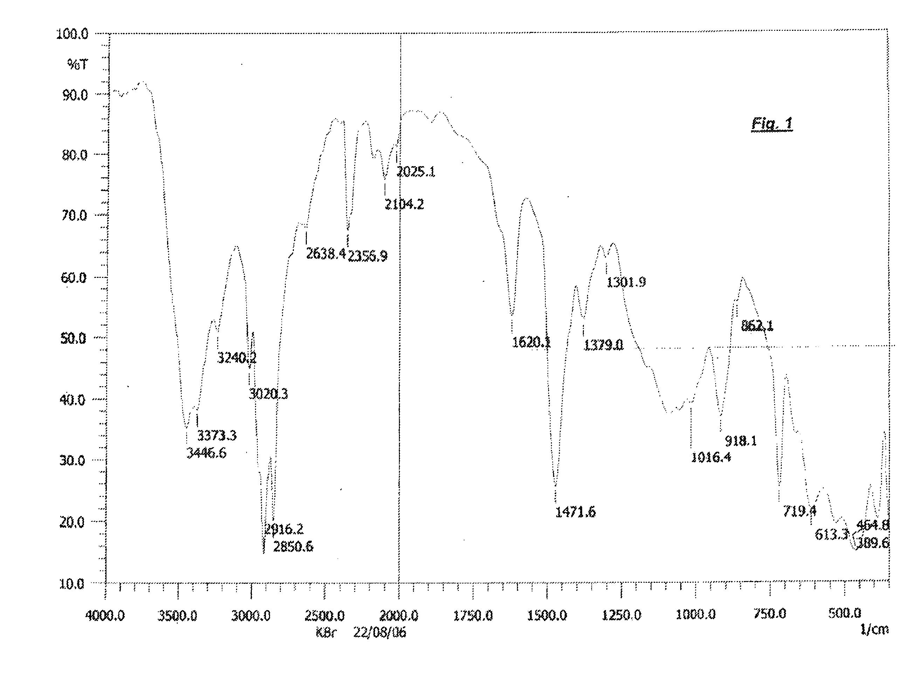

- Figur 1:: ein Infrarotspektrum eines erfindungsgemäßen Zusatzmittels.

### Beispiel:

In einem mit Edelstahl ummantelten Reaktor werden 475 kg Kokosfettsäureamin, 125 kg hydriertes Laurylamin und 300 kg Triethanolaminlaurylsulfat eingebracht. Die Mischung wird erhitzt, indem Dampf durch die Ummantelung geleitet wird. Die geschmolzene Masse wird dabei ständig gerührt. Die dabei auftretenden Lösungsmitteldämpfe werden durch Kondensation derselben entfernt.

Parallel werden in einem Bandmischer 25 kg nicht-ionisches Polyacrylamid, 25 kg kationisches Polyacrylamid und 50 kg Bariumsulfat gemischt. Die hieraus hervorgehende Pulvermasse wird langsam der in dem Reaktor befindlichen Schmelze zugefügt.

Das in dem Reaktor befindliche Gemisch wird daraufhin etwa 1 Stunde lang gleichmäßig gerührt und in geeignete Gefäße abgefüllt. Über Nacht kann die in die Gefäße abgefüllte Masse abkühlen und trocknen. Am nächsten Tag wird die entstandene Masse in Stücke gebrochen und in einem Bandmischer durch die Einwirkung der rotierenden Bänder zerkleinert. Anschließend wird die zerkleinerte Masse durch ein Sieb gegeben, um ein Pulver bzw. Granulat zu erhalten, dessen Partikel nicht größer als 12 mm sind. Das auf diese Weise erhaltene Pulver wurde in KBr gepreßt und in einem Infrarotspektrometer analysiert. Das bei dieser Messung erhaltene IR-Spektrum ist in Figur 1 wiedergegeben.

Das nach dem obigen Verfahren erhaltene Produkt weist als wäßrige Aufschlämmung einen pH-Wert von etwa 7 bis 8 auf und hat einen Schmelzpunkt in dem Bereich von 65 bis 70°C.

## Patentansprüche

1. Zusatzmittel zum Verfestigen von natürlichen Böden oder mineralischen Baustoffen, wobei das Zusatzmittel bezogen auf sein Gesamtgewicht anteilsmäßig die folgenden Komponenten umfaßt:
a) 85 bis 98 Gew.-% C8- bis C18-Fettsäureamine und/oder -sulfate, wobei die Fettsäureamine Aminderivate von Fettsäuren mit 8 bis 18 Kohlenstoffatomen in der Kohlenstoffkette sind und eine endständige Aminogruppe aufweisen, und die Fettsäuresulfate Sulfatderivate von Fettsäuren mit 8 bis 18 Kohlenstoffatomen in der Kohlenstoffkette sind und eine endständige Sulfatgruppe aufweisen,
b) 1 bis 5 Gew.-% nicht-ionisches Polyacrylamid und
c) 1 bis 5 Gew.-% kationisches Polyacrylamid.

2. Zusatzmittel nach Anspruch 1, **dadurch gekennzeichnet, daß** die Komponente a) bezogen auf ihr Gesamtgewicht anteilsmäßig
i) 43 bis 63 Gew.-% Kokosfettsäureamin,
ii) 8 bis 18 Gew.-% Laurylamin und
iii) 25 bis 39 Gew.-% Triethanolaminlaurylsulfat und/oder Talgamin umfasst.

3. Zusatzmittel nach einem der Ansprüche 1 oder 2, **dadurch gekennzeichnet, daß** es einen Anteil an Ditalgamin aufweist.

4. Zusatzmittel nach einem der Ansprüche 1 bis 3, **dadurch gekennzeichnet, daß** die Komponente a) aus vollständig hydrierten Fettsäureaminen oder -sulfaten besteht.

5. Zusatzmittel nach einem der Ansprüche 2 bis 4, **dadurch gekennzeichnet, daß** der Anteil an Triethanolaminlaurylsulfat der Komponente a) aus trockenem Triethanolaminlaurylsulfat besteht.

6. Zusatzmittel nach einem der Ansprüche 1 bis 5, **dadurch gekennzeichnet, daß** das Zusatzmittel bezogen auf sein Gesamtgewicht als Komponente d) einen Anteil von 2 bis 5 Gew.-% Bariumsulfat aufweist.

7. Verfahren zur Herstellung eines Zusatzmittels nach einem der Ansprüche 1 bis 6 bei dem man:
i) die Komponente a) nach einem der vorangehenden Ansprüche bis zur Schmelze erwärmt,
ii) die Komponenten b) bis c) nach einem der vorangehenden Ansprüche und optional auch Komponente d) aus Anspruch 6 miteinander vermischt,
iii) die Schmelze aus Stufe i) mit dem Gemisch aus Stufe ii) vermischt,
iv) das Gemisch aus Stufe iii) erkalten läßt und die erkaltete Masse zerkleinert.

8. Zusatzmittel erhältlich nach dem Verfahren von Anspruch 7.

9. Zusatzmittel nach einem der vorangehenden Ansprüche, **dadurch gekennzeichnet, daß** es ein IR-Spektrum aufweist, wie dargestellt in Figur 1.

10. Kit zum Verfestigen von natürlichen Böden oder mineralischen Baustoffen umfassend
1) ein oder mehrere Einheiten eines Zusatzmittels nach einem der Ansprüche 1 bis 9,
2) ein oder mehrere Einheiten Zement und/oder
3) ein oder mehrere Einheiten Kalk.

11. Kit nach Anspruch 10, **dadurch gekennzeichnet, daß** es zusätzlich ein oder mehrere Einheiten einer Flüssigkeit umfaßt, wobei die Flüssigkeit zusammengesetzt ist aus monomolekularen und polymolekularen grenzflächenaktiven Substanzen, wenigstens einem Lösungsvermittler, Emulgatoren und Katalysatoren mit einem Gehalt an Propylendiamin, Dimethylammoniumchlorid und Isopropylalkohol.

12. Kit nach Anspruch 10, **dadurch gekennzeichnet, daß** es in der Form einer Verfestigungsmasse vorliegt, die durch Mischen des erfindungsgemäßen Zusatzmittels mit Zement und Kalk entsteht, wobei die Verfestigungsmasse bezogen auf ihr Gesamtgewicht einen Anteil von 1 bis 10 Gew.-% aufweist, der aus einem Zusatzmittel nach einem der Ansprüche 1 bis 9 besteht, und einen Anteil von 90 bis 99 Gew.-% aufweist, der aus einem Gemisch von Zement und Kalk besteht.

13. Kit nach Anspruch 12, **dadurch gekennzeichnet, daß** die Verfestigungsmasse zusätzlich einen Anteil einer Flüssigkeit umfaßt, wobei die Flüssigkeit zusammengesetzt ist aus Wasser, monomolekularen und polymolekularen grenzflächenaktiven Substanzen, wenigstens einem Lösungsvermittler, Emulgatoren und Katalysatoren mit einem Gehalt an Propylendiamin, Dimethylammoniumchlorid und Isopropylalkohol.

14. Verwendung eines Zusatzmittels nach einem der Ansprüche 1 bis 9 oder eines Kits nach einem der Ansprüche 10 bis 13 zum Verfestigen von natürlichen Böden oder minerailschen Baustoffen.

15. Verfahren zum Verfestigen von natürlichen Böden oder mineralischen Baustoffen, bei dem man:
a) ein oder mehrere Einheiten eines Zusatzmittels nach einem der Ansprüche 1 bis 9 mit einer oder mehreren Einheiten Zement und mit einer oder mehreren Einheiten Kalk vermischt,
b) eine Schicht des Gemisches aus Stufe a) auf den zu verfestigenden natürlichen Boden oder mineralischen Baustoff aufbringt,
c) auf die Schicht aus Stufe b) eine wässrige Flüssigkeit aufbringt und
d) den natürlichen Boden oder mineralischen Baustoff mit der darauf aufgebrachten Schicht aus Stufe b) und der wässrigen Flüssigkeit aus Stufe c) komprimiert.

## Claims

1. An additive for consolidating natural soils or mineral building materials, wherein the additive includes the following components quantitatively in relation to its total weight:
a) 85 to 98% by weight of C8 to C18 fatty acid amines and/or sulphates, wherein the fatty acid amines are amino derivatives of fatty acids with 8 to 18 carbon atoms in the carbon chain and have a terminal amino group, and the fatty acid sulphates are sulphate derivatives of fatty acids with 8 to 18 carbon atoms in the carbon chain and have a terminal sulphate group,
b) 1 to 5% by weight of non-ionic polyacrylamide, and
c) 1 to 5% by weight of cationic polyacrylamide.

2. An additive according to claim 1 **characterised in that** the component a) includes quantitatively in relation to its total weight
i) 43 to 63% by weight of coconut fatty acid amine,
ii) 8 to 18% by weight of lauryl amine, and
iii) 25 to 39% by weight of triethanol amine lauryl sulphate and/or tallow amine.

3. An additive according to one of claims 1 and 2 **characterised in that** it has a proportion of tallow diamine.

4. An additive according to one of claims 1 to 3 **characterised in that** the component a) comprises completely hydrated fatty acid amines or sulphates.

5. An additive according to one of claims 2 to 4 **characterised in that** the proportion of triethanol amine lauryl sulphate of the component a) comprises dry triethanol amine lauryl sulphate.

6. An additive according to one of claims 1 to 5 **characterised in that** in relation to its total weight as component d) the additive has a proportion of 2 to 5% by weight of barium sulphate.

7. A process for producing an additive according to one of claims 1 to 6 in which:
i) the component a) according to one of the preceding claims is heated until it melts,
ii) the components b) to c) according to one of the preceding claims and optionally also component d) of claim 6 are mixed together,
iii) the molten material from step i) is mixed with the mixture from step ii), and
iv) the mixture from step iii) is left to cool and the cooled material is comminuted.

8. An additive which can be obtained according to the process of claim 7.

9. An additive according to one of the preceding claims **characterised in that** it has an IR spectrum as shown in Figure 1.

10. A kit for consolidating natural soils or mineral building materials including
1) one or more units of an additive according to one of claims 1 to 9,
2) one or more units of cement, and/or
3) one or more units of lime.

11. A kit according to claim 10 **characterised in that** it additionally includes one or more units of a liquid, wherein the liquid is composed of monomolecular and polymolecular interface-active substances, at least one dissolution aid, emulsifiers and catalysts with a content of propylene diamine, dimethyl ammonium chloride and isopropyl alcohol.

12. A kit according to claim 10 **characterised in that** it is in the form of a consolidation material produced by mixing the additive according to the invention with cement and lime, wherein the consolidation material in relation to its total weight has a proportion of 1 to 10% by weight comprising an additive according to one of claims 1 to 9 and a proportion of 90 to 99% by weight comprising a mixture of cement and lime.

13. A kit according to claim 12 **characterised in that** the consolidation material additionally includes a proportion of a liquid, wherein the liquid is composed of water, monomolecular and polymolecular interface-active substances, at least one dissolution aid, emulsifiers and catalysts with a content of propylene diamine, dimethyl ammonium chloride and isopropyl alcohol.

14. Use of an additive according to one of claims 1 to 9 or a kit according to one of claims 10 to 13 for the consolidation of natural soils or mineral building materials.

15. A method of consolidating natural soils or mineral building materials in which:
a) one or more units of an additive according to one of claims 1 to 9 is mixed with one or more units of cement and with one or more units of lime,
b) a layer of the mixture of step a) is applied to the natural soil or mineral building material to be consolidated,
c) an aqueous liquid is applied to the layer from step b), and
d) the natural soil or mineral material is compressed with the layer of step b) applied thereto and the aqueous liquid from step c).

## Revendications

1. Additif destiné à consolider des sols naturels ou des matériaux de construction minéraux, l'additif comprenant, en proportion de son poids total, les composants suivants :
a) 85 à 98 % en poids d'amines et/ou de sulfates d'acides gras en C8 à C18, les amines d'acides gras étant des dérivés amines d'acides gras contenant 8 à 18 atomes de carbone dans la chaîne carbonée, et présentant un groupe amino terminal, et les sulfates d'acides gras étant des dérivés sulfates d'acides gras contenant 8 à 18 atomes de carbone dans la chaîne carbonée et présentant un groupe sulfate terminal,
b) 1 à 5 % en poids de polyacrylamide non ionique, et
c) 1 à 5 % en poids de polyacrylamide cationique.

2. Additif selon la revendication 1, **caractérisé en ce que** le composant a) comprend, en proportion de son poids total
i) 43 à 63 % en poids d'amine d'acide gras,
ii) 8 à 18 % en poids de laurylamine, et
iii) 25 à 39 % en poids de laurylsulfate de triéthanolamine et/ou de talgamine.

3. Additif selon la revendication 1 ou 2, **caractérisé en ce qu'**il présente une proportion de ditalgamine.

4. Additif selon l'une des revendications 1 à 3, **caractérisé en ce que** le composant a) est constitué par des amines ou sulfates d'acides gras entièrement hydrogénés.

5. Additif selon l'une des revendications 2 à 4, **caractérisé en ce que** la proportion de laurylsulfate de triéthanolamine du composant a) est constituée de laurylsulfate de triéthanolamine sec.

6. Additif selon l'une des revendications 1 à 5, **caractérisé en ce que** l'additif présente, en proportion de son poids total, comme composant a) une fraction de 2 à 5 % en poids de sulfate de baryum.

7. Procédé de fabrication d'un additif selon l'une des revendications 1 à 6, dans lequel
i) on chauffe le composant a) selon l'une des revendications précédentes jusqu'à la fusion,
ii) on mélange ensemble les composants b) à c) selon l'une des revendications précédentes et, éventuellement, aussi le composant d) selon la revendication 6,
iii) on mélange le bain fondu issu de la phase i) avec le mélange issu de la phase ii),
iv) on laisse refroidir le mélange issu de la phase iii) et on broie la masse refroidie.

8. Additif pouvant être obtenu par le procédé selon la revendication 7.

9. Additif selon l'une des revendications précédentes, **caractérisé en ce qu'**il présente un spectre IR tel que celui représenté sur la figure 1.

10. Kit pour consolider des sols naturels ou des matériaux de constructions minéraux comprenant :
1) une ou plusieurs unités d'un additif selon l'une des revendications 1 à 9,
2) une ou plusieurs unités de ciment et/ou,
3) une ou plusieurs unités de chaux.

11. Kit selon la revendication 10, **caractérisé en ce qu'**il comprend en supplément une ou plusieurs unités d'un liquide, le liquide étant composé de substances tensioactives monomoléculaires et polymoléculaires, d'au moins un solvant, d'émulsifiants et de catalyseurs présentant une certaine concentration en propylènediamine, en chlorure de diméthylammonium et en alcool isopropylique.

12. Kit selon la revendication 10, **caractérisé en ce qu'**il se présente sous la forme d'une pâte de consolidation qui est obtenue par mélange de l'additif selon l'invention avec du ciment et de la chaux, la pâte de consolidation présentant, en proportion de son poids total, une fraction de 1 à 10 % en poids qui est composée d'un additif selon l'une des revendications 1 à 9, et une fraction de 90 à 99 % en poids qui est composée d'un mélange de ciment et de chaux.

13. Kit selon la revendication 12, **caractérisé en ce que** la pâte de consolidation contient en supplément une fraction d'un liquide, le liquide étant composé d'eau, de substances tensioactives monomoléculaires et polymoléculaires, d'au moins un solvant, d'émulsifiants et de catalyseurs possédant une certaine concentration en propylènediamine, en chlorure de diméthylammonium et en alcool isopropylique.

14. Utilisation d'un additif selon l'une des revendications 1 à 9 ou d'un kit selon l'une des revendications 10 à 13, pour la consolidation de sols naturels ou de matériaux de construction minéraux.

15. Procédé pour consolider des sols naturels ou des matériaux de construction minéraux, dans lequel :
a) on mélange une ou plusieurs unités d'un additif selon l'une des revendications 1 à 9, avec une ou plusieurs unités de ciment et avec une ou plusieurs unités de chaux,
b) on dépose une couche du mélange issu de la phase a) sur le sol naturel à consolider ou sur le matériau de construction minéral,
c) on dépose un liquide aqueux sur la couche issue de la phase b), et
d) on compacte le sol naturel ou le matériau de construction minéral sur lequel la couche issue de la phase b) et le liquide aqueux issu de la phase c) ont été déposés.
